# EUROPÄISCHE PATENTSCHRIFT

(11) **EP 2 178 947 B1**
(45) Veröffentlichungstag und Bekanntmachung des Hinweises auf die Patenterteilung: **18.04.2012**
(21) Anmeldenummer: 08761088.7
(22) Anmeldetag: 17.06.2008
(51) Int. Cl.: C08G 77/08, C08G 77/14

(54) **VERFAHREN ZUR KONTROLLIERTEN HYDROLYSE UND KONDENSATION VON EPOXY-FUNKTIONELLEN ORGANOSILANEN SOWIE DEREN COKONDENSATION MIT WEITEREN ORGANOFUNKTIONELLEN ALKOXYSILANEN**
PROCESS FOR CONTROLLED HYDROLYSIS AND CONDENSATION OF EPOXY-FUNCTIONAL ORGANOSILANES AND THE COCONDENSATION THEREOF WITH FURTHER ORGANOFUNCTIONAL ALKOXYSILANES
PROCÉDÉ D'HYDROLYSE ET CONDENSATION CONTRÔLÉES D'ORGANOSILANES ÉPOXYFONCTIONNELS ET LEUR CO-CONDENSATION AVEC D'AUTRES ALCOXYSILANES ORGANOFONCTIONNELS

(30) Priorität: 14.08.2007 DE 102007038314
(43) Veröffentlichungstag der Anmeldung: 28.04.2010
(73) Patentinhaber: Evonik Degussa GmbH, 45128 Essen (DE)
(72) Erfinder: WASSMER, Christian, 79688 Hausen (DE); STANDKE, Burkhard, 79540 Lörrach (DE); LIPPERT, Irene, 79618 Rheinfelden (DE); JENKNER, Peter, 46485 Wesel (DE)
(86) Internationale Anmeldenummer: PCT/EP2008/057590
(87) Internationale Veröffentlichungsnummer: WO 2009/021766

(56) Entgegenhaltungen:
- US-A- 6 069 259
- US-A1- 2006 225 613

## Beschreibung

Die vorliegende Erfindung betrifft ein spezielles Verfahren zur Durchführung einer kontrollierten Hydrolyse und Kondensation von epoxifunktionellen Alkoxysilanen oder eines epoxifunktonelle Alkoxysilane enthaltenden Gemischs von Organoalkoxysilanen in Gegenwart eines Hydrolysekatalysators.

Der Begriff Kondensation schließt hier und nachfolgend auch die Cokondensation entsprechender Hydrolyse- und/oder Kondensationsprodukte ein.

Organoalkoxysilane sowie deren Zubereitungen, insbesondere umweltfreundliche wässrige Systeme, sind heute wichtige Stoffe in vielen Bereichen der industriellen Fertigung und des täglichen Lebens, vgl. z. B. EP 0 832 911 A1.

Beim Einsatz von Silanen, z. B. 3-Glycidyloxypropyltrimethoxysilan (GLYMO) als Haftvermittler, Primer etc., wird das zur Hydrolyse erforderliche Wasser meist im hohen Überschuss eingesetzt. Ziel dabei ist, eine möglichst vollständige Hydrolyse zu erreichen. In speziellen Anwendungen ist eine Hydrolyse mit deutlich geringeren Wassermengen erforderlich. Besonders geringe Wassermengen liegen zur Hydrolyse und Kondensation dann vor, wenn weniger als 1 mol Wasser pro mol Alkoxyfunktion eingesetzt wird. Dies ist beispielsweise immer dann erforderlich, wenn Silane in Anwendungen eingesetzt werden sollen, in denen freies Wasser stört und trotzdem eine Hydrolyse der Alkoxyfunktionen erforderlich ist, z. B. bei Einsatz als Comonomer bei Polymerisationen oder bei der Polymermodifizierung.

### Stöchiometrische Hydrolyse:

== SiOR + H₂O → ≡ SiOH + ROH (R = Alkyl)

Bei Hydrolyse verbleibt nach der Reaktion überschüssiges Wasser im Reaktionsraum. Bei stöchiometrischer und unterstöchiometrischer Hydrolyse wird sämtliches Wasser durch die Hydrolysereaktion verbraucht.

Viele Silane hydrolysieren unter den Bedingungen der leicht überstöchiometrischen, stöchiometrischen und unterstöchiometrischen Hydrolyse leider nicht vollständig. Beispielsweise verbleibt bei der Hydrolyse von 3-Glycidyloxypropyltrimethoxysilan auch bei einer hohen Konzentration an sauren Katalysatoren, wie HCl oder Essigsäure, auch nach Stunden und auch nach Hydrolyse bei erhöhter Temperatur ein Monomeranteil von ca. 90 % (Flächenprozent GC WLD). Saure Katalysatoren, insbesondere HCl, zeigen bei vielen Anwendungen Nachteile, z. B. bei Beschichtungen. Ferner sind HCl enthaltende Systeme aus Gründen der Umweltverträglichkeit und aufgrund der Korrosionsproblematik für Beschichtungssysteme wenig wünschenswert.

Borverbindungen werden beispielsweise in Glasgewebefinishes, Sol-Gel-Systemen, Korrosionsschutz- und Barrierebeschichtungen sowie in Sol-Gel-Hybridsystemen eingesetzt [u. a. Chem. Mater. (1999), Vol. 11(7), p. 1672-1679; CN1299169A; EP1204784A1; JP2000302932A2; US2001024685A1; US2002051888A1; WO02/038686A2).

Ferner ist aus EP 1 362 904 A1 bekannt, einer Zusammensetzung, die Alkyl-/Aminoalkyl-funktionelle Cokondensate enthält, Börsäure beizumischen, um die antibakterielle sowie fungizide Wirkung zu nutzen.

Aus JP04080030A2 (13.03.1992) ist eine thermoplastische Oberfläche und eine Barriereschicht aus linearen Polymeren bekannt, die Si-O-B-Bindungen enthalten und aus einem Sol-Gel-Polymer gebildet werden. So erhält man das Sol-Gel-System durch Mischen von 25 g Tetraethoxysilan, 25 g Ethanol, 1,86 g einer 2n HCl und 1,51 g Wasser bei 80 °C über 1 bis 2 Stunden, anschließend werden dem Ansatz 2,5 g Epoxysilan und 1,0 g Boroxid zugegeben und nochmals für 1 bis 2 Stunden gemischt. Nach einem weiteren Zusatz von 0,5 g einer ethanolischen Lösung eines organischen Amins wird die Zubereitung auf eine PET-Unterlage aufgebracht und bei 170 bis 300 °C behandelt.

Es bestand die Aufgabe, eine weitere, d. h. aus dem Stand der Technik bisher nicht bekannte Methode bereitzustellen, die es erlaubt, organofunktionelle Alkoxysilane, insbesondere 3-Glycidyloxypropylalkoxysilane als solche oder entsprechende 3-Glycidyloxypropylalkoxysilan enthaltenden Gemische von Organoalkoxysilanen, mit einer eingesetzten Menge an Wasser, insbesondere auch bei einer unterstöchiometrischen Menge an Wasser, sicher und möglichst vollständig zu hydrolysieren und zumindest anteilig zu kondensieren.

Die gestellte Aufgabe wird erfindungsgemäß entsprechend den Angaben in den Patentansprüchen gelöst.

So wurde in überraschender Weise gefunden, dass man vorteilhaft eine praktisch vollständige Hydrolyse von 3-Glycidyloxypropyltrimethoxysilan (GLYMO) mit einer Wassermenge von 0,05 bis 5, bevorzugt 0,1 bis 2, insbesondere 0,15 bis 1 mol Wasser pro mol eingesetzter Alkoxyfunktion unter Einsatz bzw. in Gegenwart von Borsäure durchführt. Insbesondere kann man innerhalb von nur 7 Stunden mittels Borsäurekatalyse so gut wie das komplette GLYMO zu oligomeren Produkten umsetzen. Eine praktisch vollständige Hydrolyse bedeutet in diesem Zusammenhang, dass weniger als 20 Gew.-% oder Flächen-% (GC-WLD-%) des ursprünglich eingesetzten monomeren Silans nach Ausführung der Hydrolyse im Reaktionsraum unhydrolysiert verbleiben.

Durch das erfindungsgemäße Verfahren wird vorteilhaft ermöglicht, oligomere Silane herzustellen, die bislang nicht zugänglich waren. Insbesondere oligomeres GLYMO als solches und entsprechende Cokondensate bzw. deren Gemische können erstmals mittels Borsäurekatalyse hergestellt werden.

Weiter wurde in überraschender Weise gefunden, dass auch Borsäure bei den besagten Kondensaten bzw. Cokondensaten und ihrer entsprechenden Gemische in die Oligomer- bzw. Siloxankette zumindest anteilig mit einkondensiert wird.

Solche epoxidfunktionellen Kondensate bzw. Cokondensate können idealisiert durch folgende Strukturformel dargestellt werden, dabei kann die Struktur linear, cyclisch oder verzweigt ausgeführt sein: 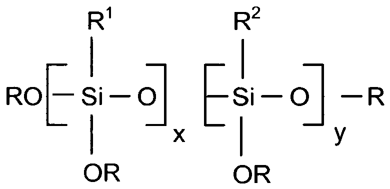 worin
R¹ für eine Gruppe 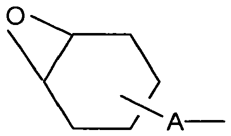 oder 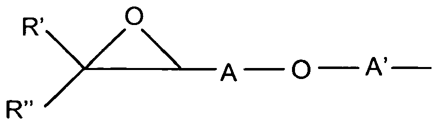 steht und
Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, vorzugsweise H, Methyl, Ethyl, n-Propyl, n-Butyl, Gruppen A und A' gleich oder verschieden sind und jeweils für eine bivalente Alkylgruppe mit 1 bis 10 C-Atomen stehen, vorzugsweise -(CH₂)₂-, -(CH₂)₂-, -(CH₂)₃-, -(CH₂)(CH)(CH₃)(CH₂)- für A' sowie -(CH₂)- für A, Gruppen R² gleich oder verschieden sind und R² eine lineare, verzweigte oder cyclische, gegebenenfalls substituierte Alkylgruppe mit 1 bis 20 C-Atomen darstellt, beispielsweise substituiert mit N-, O-, S-, Halogen tragenden Gruppen, wie Fluoralkyl, Aminoalkyl, Mercaptoalkyl, Methacryloxyalkyl oder OR, d. h. OH oder Alkoxy, insbesondere Methoxy oder Ethoxy, und x eine ganze Zahl größer gleich 1 darstellt, vorzugsweise 1 bis 50, und y für eine ganze Zahl von 0 bis 50 steht und x + y ≥ 2 ist.

Darüber hinaus ist es überraschend, dass der Oxiranring durch die vorliegende Borsäure nicht gespalten wird, obwohl Borverbindungen ansonsten als Vernetzungskatalysatoren für Epoxidharzsysteme eingesetzt werden.

Die erfindungsgemäß erhaltenen "GLYMO" Hydrolysate bzw. Kondensate sowie Cokondensate eignen sich insbesondere zur Modifizierung von Polyesterharzen. Dabei wird eine deutlich verbesserte Haftung und Chemikalienresistenz der Beschichtung erreicht, wie es beispielsweise der deutschen Parallelanmeldung mit dem Titel "Anorganisch-modifizierte Polyesterbindemittelzubereitung, Verfahren zur Herstellung und ihre Verwendung" zu entnehmen ist.

Gegenstand der vorliegenden Erfindung ist daher ein Verfahren zur Durchführung einer kontrollierten Hydrolyse und Kondensation eines Epoxy-funktionellen Silans der allgemeinen Formel I

R¹-SiR'ₘ(OR)₃₋ₘ

worin R¹ für eine Gruppe 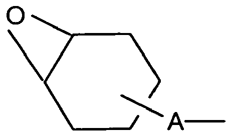 oder 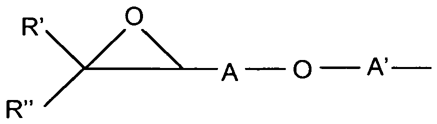 steht und
Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, vorzugsweise H, Methyl, Ethyl, n-Propyl, n-Butyl, Gruppen A und A' gleich oder verschieden sind und jeweils für eine bivalente Alkylgruppe mit 1 bis 10 C-Atomen stehen, vorzugsweise -(CH₂)₂-, -(CH₂)₂-, -CH₂)₃-, -(CH₂)(CH)(CH₃)(CH₂)- für A' sowie -(CH₂)- für A, Gruppen R² gleich oder verschieden sind und R² eine lineare, verzweigte oder cyclische, gegebenenfalls substituierte Alkylgruppe mit 1 bis 20 C-Atomen darstellt, beispielsweise substituiert mit N-, O-, S-, Halogen tragenden Gruppen, wie Fluoralkyl, Aminoalkyl, Mercaptoalkyl, Methacryloxyalkyl oder OR, d. h. OH oder Alkoxy, insbesondere Methoxy oder Ethoxy, und m 0 oder 1 ist,
unter Einsatz von Borsäure [H₃BO₃ bzw. B(OH)₃]
und optional mindestens eines weiteren organofunktionellen Silans der allgemeinen Formel II

R²-SiR'ₙ(OR)₃₋ₙ (II),

worin R² eine organofunktionelle Gruppe mit der bereits oben dargelegten Bedeutung darstellt, R' Methyl bedeutet, Gruppen R unabhängig für einen Wasserstoff sowie für eine lineare, verzweigte oder cyclische Alkylgruppe mit 1 bis 6 C-Atomen stehen und n gleich 0 oder 1 ist,
wobei man pro Mol Alkoxyfunktion der eingesetzten Silane 0,001 bis ≤ 5 Mol Wasser einsetzt, man neben Borsäure als Hydrolysekatalysator und Kondensationskomponente keinen weiteren Hydrolyse- bzw. Kondensationskatalysator verwendet und die bei der Umsetzung gebildeten Kondensate auf Si-O-B- und/oder Si-O-Si-Bindungen basieren.

Bevorzugte Komponente gemäß Formel I ist 3-Glycidyloxypropyltrimethoxysilan. Man kann aber auch andere Silane, wie sie aus Formel I abzuleiten sind, vorteilhaft einsetzen.

Vorzugsweise enthält das so erhaltene Produktgemisch neben Restmengen (Spuren) Wasser und/oder einem oder mehreren Alkoholen, beispielsweise Methanol, Ethanol bzw. dem entsprechenden Hydrolysealkohol, keine weiteren Lösemittel, Stabilisatoren oder andere Zusatz- bzw. Hilfsstoffe. So enthält ein erfindungsgemäßes Gemisch insbesondere keine organischen Amine.

Gemäß Formel II kann man beim erfindungsgemäßen Verfahren vorteilhaft Methoxy-oder Ethoxysilane verwenden, die insbesondere eine funktionelle Gruppe R² aus der Reihe Methoxy, Ethoxy, Methyl, Ethyl, n-Propyl, i-Propyl, n-Butyl, n-Octyl, i-Octyl, Tridecafluor-1,1,2,2-tetrahydroctyl - um nur einige Beispiele zu nennen - tragen, beispielsweise - aber nicht ausschließlich - Methyltrimethoxysilan, Methyltriethoxysilan, Vinyltrimethoxysilan, Vinyltriethoxysilan, n-Propyltrimethoxysilan, n-Propyltriethoxysilan, n-Octyltrimethoxysilan, n-Octyltriethoxysilan, Hexadecyltrimethoxysilan, Hexadecyltriethoxysilan, Tridecafluor-1,1,2,2-tetrahydrooctyltri-methoxysilan, Tridecafluor-1,1,2,2-tetrahydrooctyltriethoxysilan, Methacryloxypropyltrimethoxysilan, Methacryloxypropyltriethoxysilan, Mercaptopropyltrimethoxysilan, Mercaptopropyltriethoxysilan, Tetramethoxysilan, Tetraethoxysilan.

Auch wird bei der vorliegenden Erfindung Borsäure nicht als Biozid eingesetzt, sondern vorteilhaft als Katalysator und/oder als Kondensationskomponente.

Bevorzugt verwendet man bei der erfindungsgemäßen Umsetzung pro Mol eingesetzter Alkoxyfunktion gemäß Formel I und/oder II 0,05 bis 5 besonders bevorzugt 0,1 bis 2, ganz besonders bevorzugt 0,15 bis 1, insbesondere alle numerischen Zwischenwerte zwischen 0,15 bis 1 Mol, beispielsweise aber nicht ausschließlich 0,2, 0,3, 0,4, 0,5, 0,6, 0,7, 0,8, 0,9, Wasser.

Ferner bevorzugt man beim erfindungsgemäßen Verfahren pro Mol eingesetztes Silan 0,001 bis 1 Mol Bor, besonders vorzugsweise 0,01 bis 0,5, insbesondere 0,07 bis 0,76 Mol Bor, das vorteilhaft in Form von Borsäure eingestellt wird.

Auch führt man beim erfindungsgemäßen Verfahren die Umsetzung vorteilhaft bei einer Temperatur im Bereich von 0 bis 200 °C, bevorzugt bei 40 bis 150 °C, besonders bevorzugt von 50 bis 100 °C, ganz besonders bevorzugt 60 bis 80 °C, durch.

So führt man die erfindungsgemäße Umsetzung insbesondere unter guter Durchmischung über 0,1 bis 100 h, bevorzugt 0,5 bis 20 h, besonders bevorzugt 1 bis 10 h, ganz besonders bevorzugt über 2 bis 6 h durch.

Ebenfalls ist es beim erfindungsgemäßen Verfahren von Vorteil, dass man aus dem so erhaltenen Produktgemisch den darin vorliegenden Alkohol und/oder Borsäureester in einer konventionellen Destillation unter vermindertem Druck zumindest anteilig entfernt. Man kann solche Bestandteile aber auch mittels Kurzweg- bzw. Dünnschichtverdampfer aus dem Produkt entfernen.

Darüber hinaus kann man so erhaltene Produkte - falls erforderlich - filtrieren oder zentrifugieren, um Schwebpartikel abzutrennen. Dazu kann man beispielsweise einen Filter oder eine Zentrifuge verwenden.

Im Allgemeinen führt man das erfindungsgemäße Verfahren wie folgt durch:

Die besagten organofunktionellen Silane und der Katalysator sowie gegebenenfalls geeignete Lösemittel, wie beispielsweise Ethanol oder Methanol, können nacheinander in einem Mischbehälter vorgelegt werden. Unter Rühren wird die Temperatur vorteilhaft auf einen Wert im Bereich 40 bis 80 °C eingestellt und solange gerührt, bis der Katalysator sich aufgelöst hat. Geeigneterweise wird anschließend unter Rühren das Hydrolysewasser gegebenenfalls in Mischung mit einem geeigneten Lösemittel, beispielsweise Ethanol oder Methanol, innerhalb von einigen Minuten bis Stunden, bevorzugt innerhalb von weniger als 0,5 h, zudosiert. Danach kann zur Vervollständigung der Reaktion die Mischung solange temperiert und beispielsweise bei 40 bis 100 °C nachgerührt werden, bis die Silanmonomerkonzentration den gewünschten Wert erreicht hat, vorteilhaft 0 bis 15 GC WLD %. Das resultierende, Lösemittel enthaltende Oligomerengemisch kann anschließend so verwendet werden wie es anfällt; man kann jedoch auch die Lösemittel, d. h. zugesetzte Lösemittel und Hydrolysealkohol, destillativ unter vermindertem Druck, beispielsweise 0 bis 1000 mbar, bevorzugt bei 100 bis 500 mbar, und erhöhter Temperatur, beispielsweise 40 bis 200 °C, bevorzugt 50 bis 150 °C, entfernen. Sollte das Produkt Trübung enthalten, kann es konventionell filtriert werden, z. B. über Druckfilter. Das Produkt ist in der Regel farblos bis gelb, flüssig und vorwiegend mit einer Viskosität im Bereich von 1 bis 1 000 mPa s, bevorzugt unter 100 mPa s. Das Produkt ist vorteilhaft über mehrere Monate bei Raumtemperatur und auch in den meisten Fällen bei erhöhter Temperatur (50 °C) lagerstabil.

Die Reaktionskontrolle (Bestimmung der Konzentration an monomeren Silanen im Reaktionsgemisch) erfolgt bevorzugt über Standard Gaschromatografie (HP 5890 Series II, Wärmeleitfähigkeitsdetektor). Die Temperaturmessung kann konventionell über Thermoelemente erfolgen. Druckmessung erfolgt beispielsweise über Piezodruckaufnehmer (z. B. Vacubrand DVR 2). Der Restmonomergehalt in den Produkten kann zusätzlich über ²⁹Si NMR Spektroskopie überprüft werden und liegt vorteilhaft im Bereich von 5 bis 17 mol-%. Der Vernetzungsgrad des Produktes wurde durch Bestimmung der M, D, T Struktureinheiten via ²⁹Si NMR Spektroskopie ermittelt. In den erfindungsgemäßen Silankondensaten liegt der Anteil an M-Struktureinheiten bevorzugt im Bereich von 14 bis 35 mol-%, der an D-Strukturen im Bereich von 36 bis 42 mol-% und der an T-Strukturen im Bereich von 15 bis 34 %. Die Hydro-Methanolyse der Epoxidgruppe kann via ¹³C NMR Spektroskopie bestimmt werden. Die erfindungsgemäßen Produktzusammensetzungen enthalten vorteilhaft nur einen Anteil von 3 bis 7 mol-% geöffnetes Epoxid bezogen auf den ursprünglich eingesetzten Epoxidanteil.

Die Katalyse mit HCl (Vergleichsbeispiel) liefert nach ²⁹Si NMR einen deutlich höheren Silan-Monomeranteil von 39 % nach GC Analyse bei einem Cokondensat, zum Vergleich zeigt das entsprechende B-katalysierte Cokondensat lediglich einen Anteil an monomeren Silanen von weniger als 2 GC WLD-%; an einem Homokondensat wird bei HCl-katalysierter Hydrolyse ein Monomeranteil von ca. 80 % erhalten, während der entsprechende Borsäure-katalysierte Versuch einen Monomeranteil von lediglich 14 GC WLD-% liefert. Die Katalyse mit Alkyltitanaten führt zwar zu geringen Monomeranteilen, jedoch sind die Produkte nicht lagerstabil (Gelation).

Die erfindungsgemäßen Produkte können vorteilhaft auf einen Alkoholgehalt von bis zu 0,1 % eingestellt werden. Falls erwünscht, können die erfindungsgemäßen Kondensate mit organischen Lösemitteln wie Alkohole, Ketone, Ester, Ether, Glykole, Glykolether sowie Benzinkohlenwasserstoffen und aromatischen Lösemitteln verdünnt werden. Die Anwendung als Additiv, z. B. für Polymersynthesen, erfolgt in der Regel unverdünnt oder mit kompatiblen Lösemitteln wie zuvor beschrieben.

Erfindungsgemäße Kondensate bzw. Zusammensetzungen finden vorteilhaft Anwendung als Modifizierer in Polymersynthesen, als Comonomer in Polymersynthesen, als Haftvermittler, als Bestandteil in Formulierungen der Farben und Lack sowie der Klebstoffindustrie, als Beschichtungsmittel für Füllstoffe und Pigmente, als Oberflächenmodifizierungsmittel, um nur einige Beispiele anzuführen.

Daher ist ebenfalls Gegenstand der vorliegenden Erfindung die Verwendung eines erfindungsgemäßen Gemischs Silan basierender Kondensate bzw. eines Gemischs Silan basierender Kondensate hergestellt bzw. erhalten nach dem erfindungsgemäßen Verfahren in Bindemitteln, als Haftvermittler, als Modifizierer in Polymerisationssynthesen, als Comonomer in Polymerisationssynthesen, als Bindemittel in Formulierungen der Farben und Lacke sowie der Klebstoffindustrie, als Beschichtungsmittel für Füllstoffe und Pigmente, als Oberflächenmodifizierungsmittel.

Die Erfindung wird durch die nachfolgenden Beispiele näher erläutert ohne den Gegenstand zu beschränken.

### Beispiele:

### Vergleichsbeispiel 1

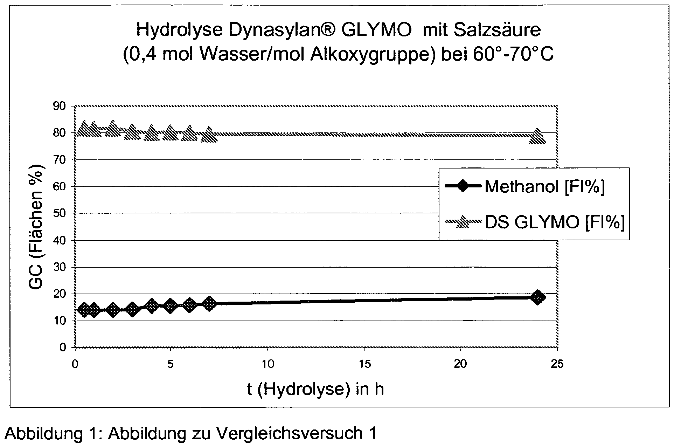

In einer 20-ml-Scintallationsflasche wurden 9,4 g Dynasylan^{®} GLYMO vorgelegt, 7,5 µl Salzsäure conc. unter Rühren (Magnetrührer) zugegeben und auf 65 °C erwärmt. Anschließend wurden 0,864 g VE-Wasser zugerührt. Es wurde 24 Stunden bei einer Sumpftemperatur von 60 bis 70 °C weitergerührt.
Es wurde eine farblose, klare Flüssigkeit erhalten mit einem Gehalt (GC - WLD) an Silanmonomer von 79 FI.-%, vgl. nachfolgende Abbildung 1.

### Vergleichsbeispiel 2

### Herstellung eines Dynasylan^{®}-GLYMO-Kondensats mit Tetra-n-butyltitanat als Hydrolysekatalysator

Die Durchführung erfolgte analog Beispiel 2, jedoch wurde Borsäurekatalysator durch Tetra-n-butyl-orthotitanat ersetzt.

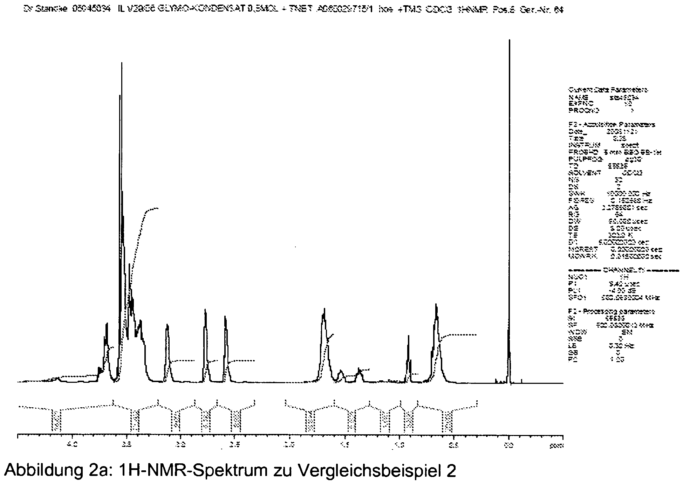

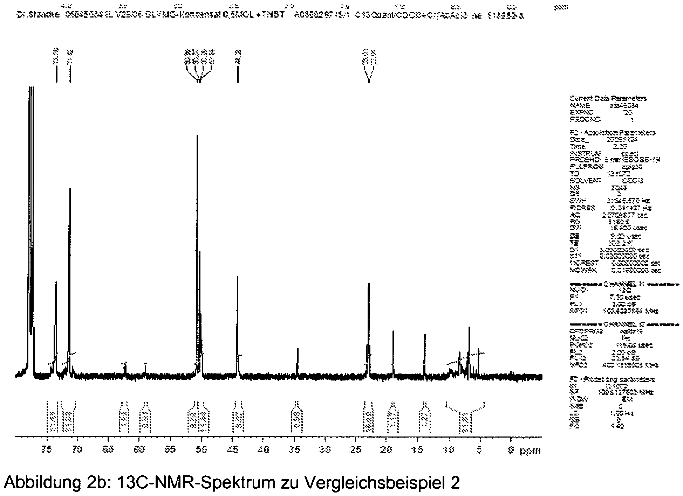

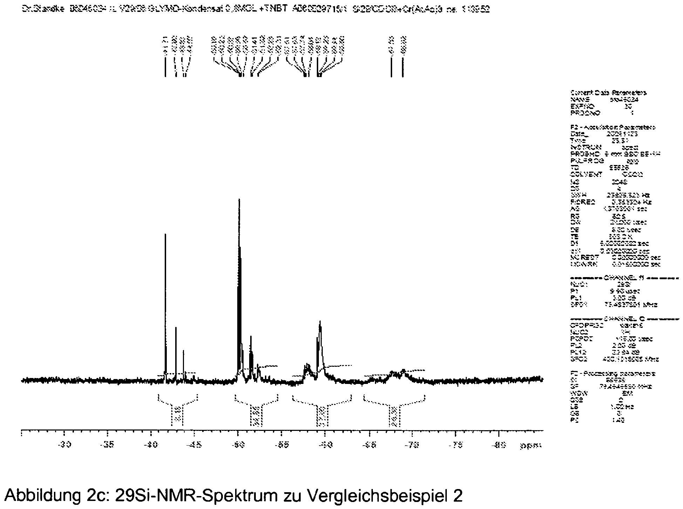

Erhalten wurde eine stark viskose gelbe Flüssigkeit. Nach einer Lagerzeit von 4 Wochen bei 50 °C war das Produkt fest. Das Produkt wurde spektroskopisch analysiert, vgl. nachfolgende Abbildungen 2a, 2b und 2c (A060029949).

### Vergleichsbeispiel 3

### Herstellung eines Co-Kondensats aus Dynasylan^{®} GLYMO / Dynasylan^{®} A mit HCl

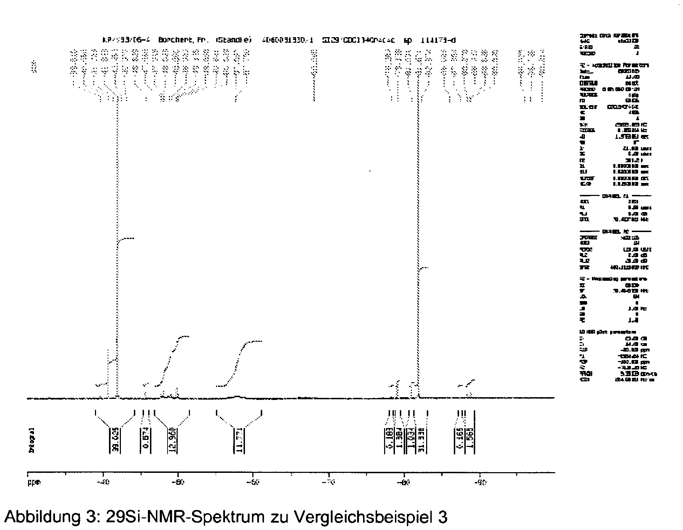

Herstellung analog Beispiel 2, jedoch wurden statt Borsäure 9,12 g Salzsäure (37-%ig) eingesetzt. Die Nachrührzeit wurde von 4 Stunden auf 8 Stunden bei 60 bis 73 °C erhöht. Im ²⁹Si-NMR wurden 27 mol-% Silanmonomere gefunden, vgl. nachfolgende Abbildung 3 (A060031330).

### Beispiel 1

In einer 20-ml-Scintallationsflasche wurden 9,4 g Dynasylan^{®} GLYMO vorgelegt, 0,188 g Borsäure unter Rühren (Magnetrührer) zugegeben, 30 Minuten bei 60 °C erwärmt und anschließend 0,864 g VE-Wasser zugerührt. Es wurde 24 Stunden bei einer Sumpftemperatur von 60 bis 70 °C weitergerührt.

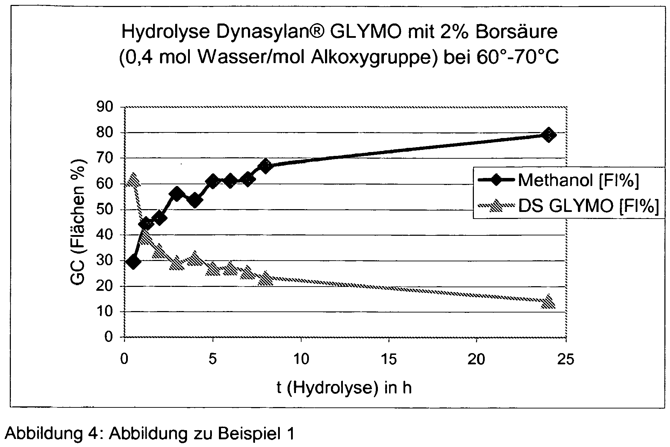

Es wurde eine farblose, klare, niedrigviskose Flüssigkeit erhalten mit einem Gehalt (GC-WLD) an Silanmonomer von 14 FI.-%. (Abbildung 4)

### Beispiel 2

### Herstellung eines Co-Kondensat aus Dynasylan^{®} GLYMO / Dynasylan^{®} MTES

In einer 1-I-Vierhalskolbenrührapparatur wurden 118,05 g Dynasylan^{®} GLYMO, 89,15 g Dynasylan^{®} MTES und 15,46 g Borsäure als Katalysator nacheinander vorgelegt. Die Sumpftemperatur wurde auf ca. 60 °C eingestellt und ca. 30 Minuten lang gerührt, bis der Katalysator gelöst war. Bei einer Sumpftemperatur von 50 °C wurde innerhalb von 5 Minuten ein Gemisch aus 8,1 g Wasser und 64,1 g Methanol zugetropft. Bei einer Sumpftemperatur von ca. 70 bis 75 °C wurde das Gemisch 5,5 Stunden nachgerührt. Der Monomerenanteil (GC-WLD) lag nun bei < 5 FI.-%. Nach dem Abkühlen über Nacht wurden bei einer Sumpftemperatur von ca. 50 °C und einem Vakuum von 500 bis 100 mbar freies Methanol und Ethanol abdestilliert. Anschließend wurde das Reaktionsprodukt bei < 1 mbar 2 Stunden bei 65 °C destilliert. Dabei wurden auch die im Sumpfprodukt noch vorhandenen Borsäureester abdestilliert. Es entstand eine leicht trübe Flüssigkeit, die über ein Druckfilter mit SEITZ-EK 1 filtriert wurde.

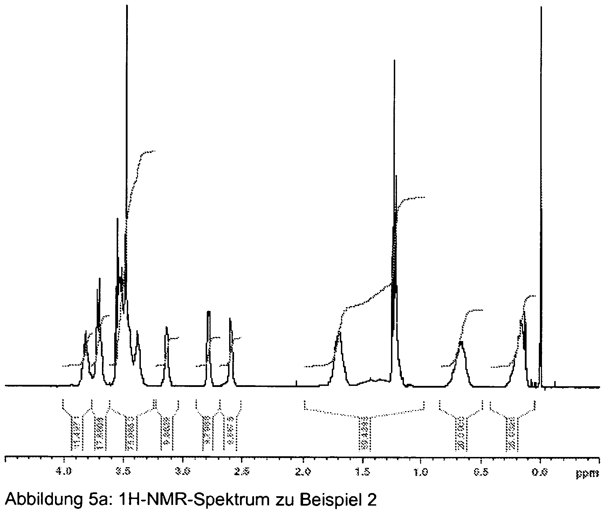

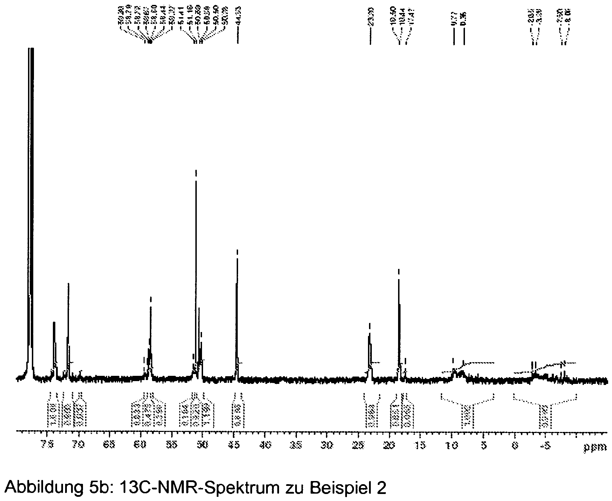

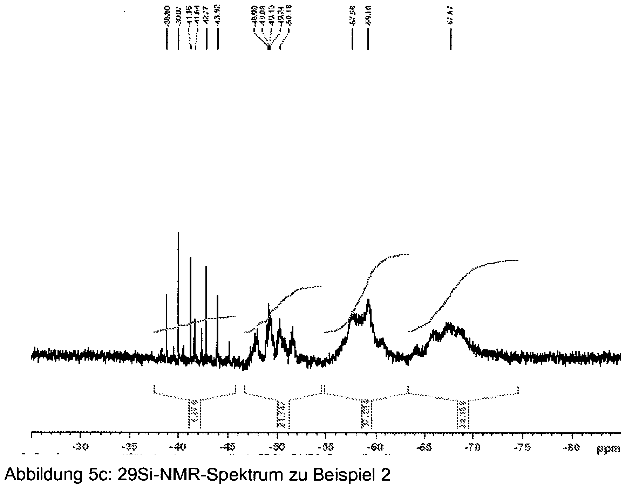

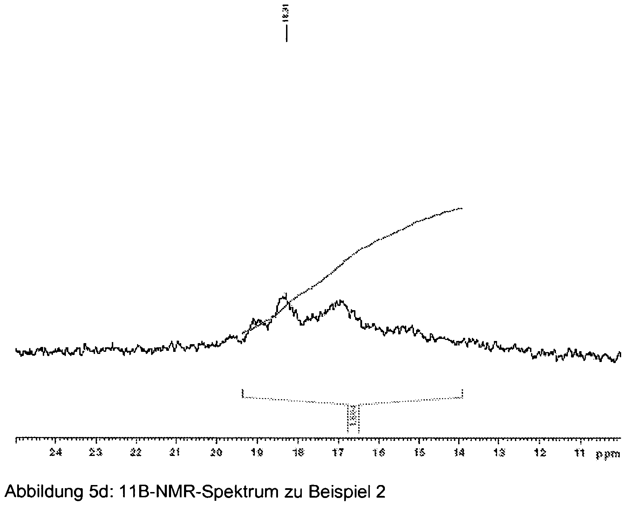

Erhalten wurde eine klare und farblose Flüssigkeit mit einer Viskosität von 43 mPa s und einem SiO₂-Gehalt von 34,8 %. Der Epoxidring war zu 97 mol-% geschlossen. Die Lagerstabilität betrug > 3 Monate 50 °C. Ferner wurde das Produkt spektroskopisch untersucht, vgl. nachfolgende Abbildungen 5a, 5b, 5c und 5d (A060029721).

### Beispiel 3

### Herstellung eines Dynasylan^{®} GLYMO-Kondensats

235,6 g Dynasylan^{®} GLYMO wurden mit 15,9 g Borsäure im 500-ml-Vierhalskolben unter Rühren vorgelegt und auf ca. 60 °C erwärmt (weiße Suspension). Nach ca. 30 Minuten war Borsäure vollständig gelöst. Bei ca. 46 °C Sumpftemperatur wurde innerhalb von 5 Minuten ein Gemisch aus 8,2 g VE-Wasser und 64,2 g Methanol unter kräftigem Rühren zugetropft. Es entstand eine klare, farblose Flüssigkeit. Bei einer Sumpftemperatur von 60 bis 70 °C wurde 10,5 Stunden nachgerührt. Bei einer Sumpftemperatur von ca. 50 °C und einem Vakuum von 500 bis 100 mbar wurde der gesamte Alkohol innerhalb von 4 Stunden abdestilliert. Anschließend wurde das Reaktionsprodukt bei < 1 mbar ca. 2 Stunden bis max. 70 °C Sumpftemperatur destilliert. Dabei wurden die im Sumpfprodukt noch vorhandenen Borsäureester abdestilliert. Es entstand eine leicht trübe Flüssigkeit, die über ein Druckfilter mit SEITZ-EK 1 filtriert wurde.

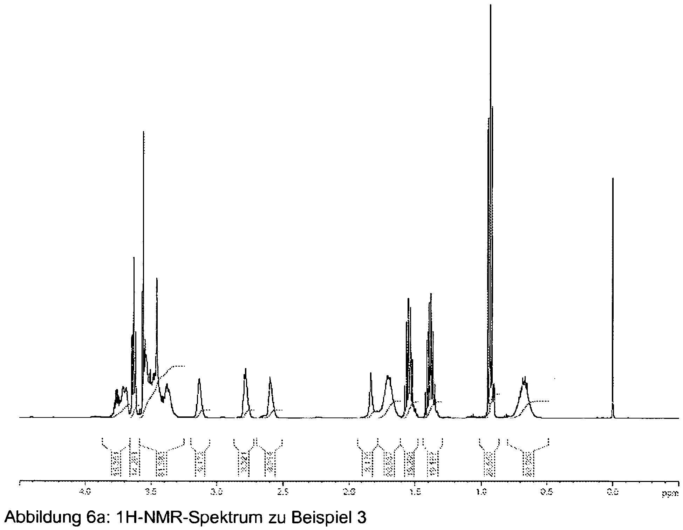

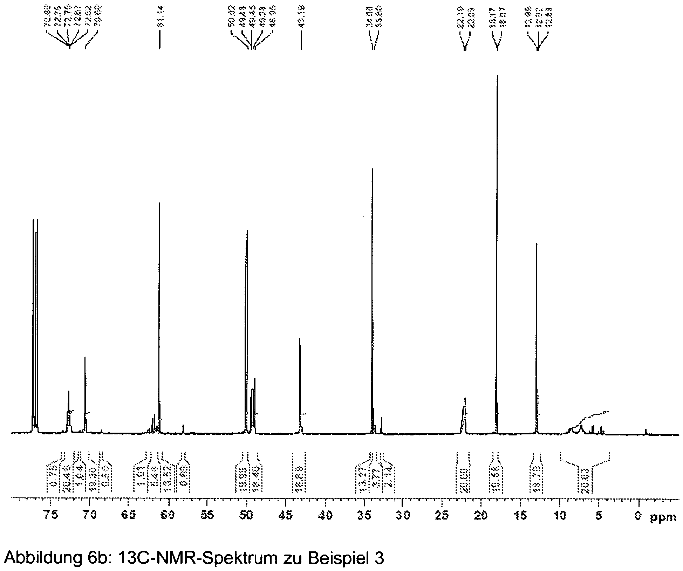

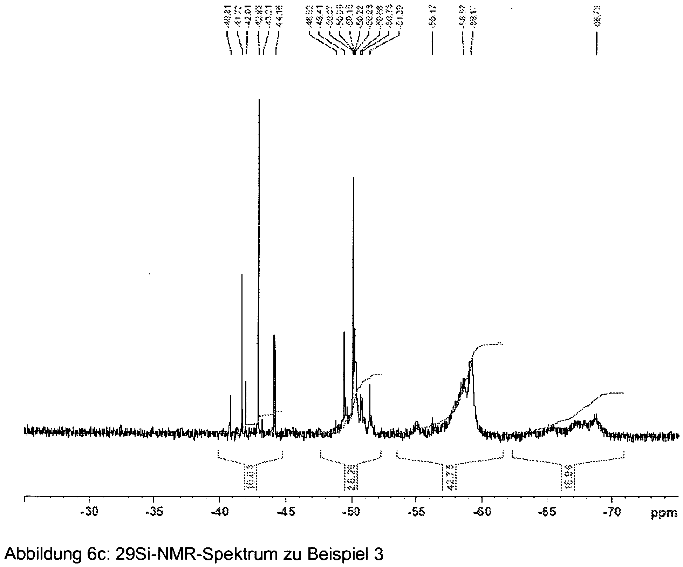

Erhalten wurde eine klare und farblose Flüssigkeit mit einer Viskosität von 55 mPa s und einem SiO₂-Gehalt von 22,1 %. Der Epoxidring (¹H-NMR) war zu ca. 93 mol-% geschlossen. Der Monomerenanteil (²⁹NMR Analyse) lag bei 10 %. Vergleiche hierzu die nachfolgenden Abbildungen 6a, 6b und 6c (A060029949). Die Lagerstabilität betrug > 2,5 Monate 50 °C.

### Beispiel 4

### Herstellung eines Co-Kondensats aus Dynasylan^{®} GLYMO / Dynasylan^{®} A

In einer 0,5-I-Vierhalskolbenrührapparatur wurden 118,05 g Dynasylan^{®} GLYMO, 104,17 g Dynasylan^{®} A und 15,46 g Borsäure vorgelegt. Die Sumpftemperatur wurde auf ca. 60 °C eingestellt, und nach 1 Stunde wurde bei einer Sumpftemperatur von 44 °C ein Gemisch aus 8,10 g Wasser und 64,10 g Methanol innerhalb von 4 Minuten zugetropft. Bei einer Sumpftemperatur von ca. 60 bis 70 °C wurde das Gemisch ca. 4 Stunden nachgerührt. Bei einer Sumpftemperatur von ca. 50 °C und einem Vakuum von 500 bis 100 mbar wurden das freie Methanol und die Borsäureester innerhalb von ca. 5 Stunden abdestilliert. 2 Stunden vor Destillationsende wurde mit einem Vakuum von < 1 mbar abdestilliert. Danach wurden bei Normaldruck und Raumtemperatur 64,1 g n-Butanol eingemischt. Es entstand eine leicht trübe Flüssigkeit, die über einen Druckfilter mit SEITZ-EK 1 filtriert wurde.

Erhalten wurde eine farblose, klare Flüssigkeit mit einem SiO₂-Gehalt von 25,4 % und einer Viskosität von 62 mPa s. Der Gehalt an Silanmonomeren (GC-WLD) betrug < FI.-%.

### Beispiel 5

### Herstellung eines Co-Kondensats aus Dynasylan^{®} GLYMO / Dynasylan^{®} PTMO

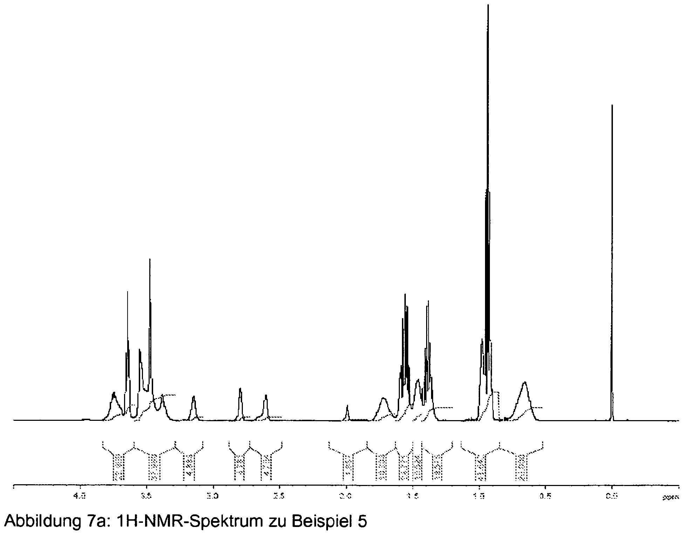

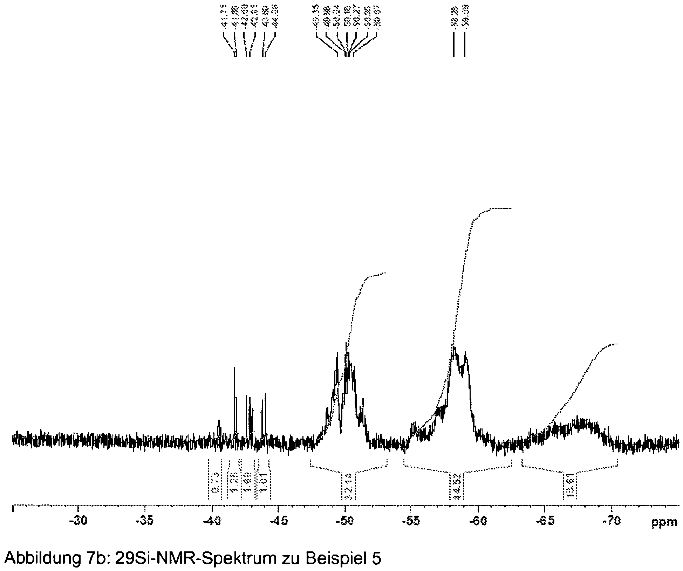

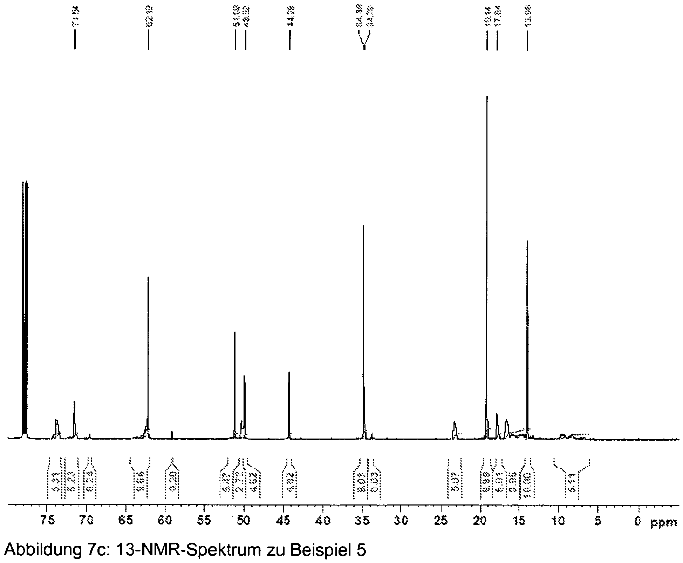

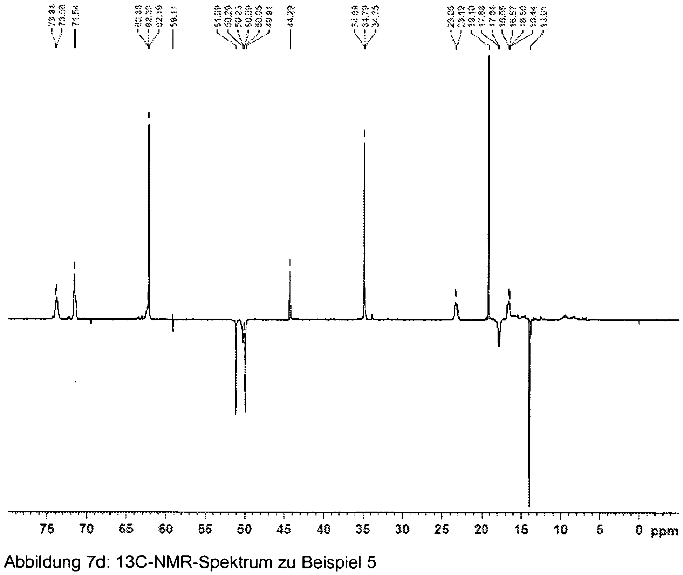

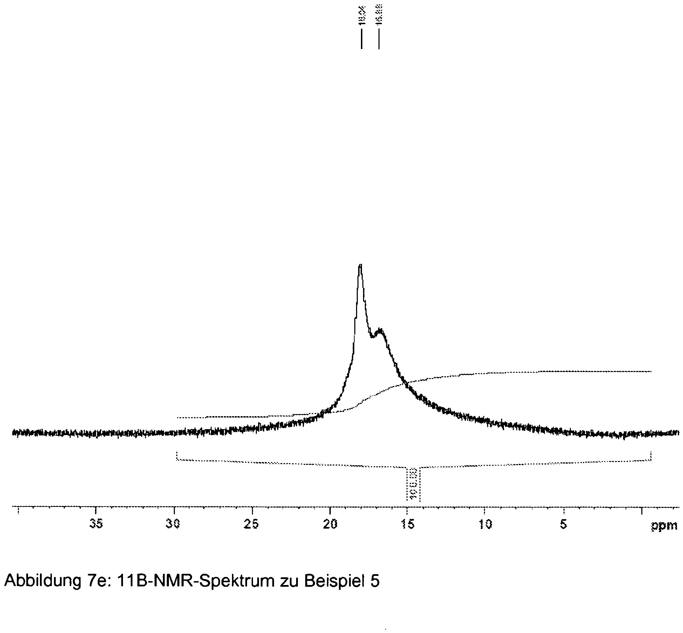

In einer 4-I-Vierhalskolbenrührapparatur wurden 707,3 g Dynasylan^{®} GLYMO, 492,1 g Dynasylan^{®} PTMO und 92,4 g Borsäure vorgelegt. Die Sumpftemperatur wurde auf ca. 60 °C eingestellt. Nach 1 Stunde war die Borsäure vollständig gelöst. Bei einer Sumpftemperatur von ca. 40 bis 50 °C wurde innerhalb von 6 Minuten ein Gemisch aus 81,3 g Wasser und 384,6 g Methanol zugetropft. Bei einer Sumpftemperatur von ca. 60 bis 70 °C wurde das Gemisch 6 Stunden nachgerührt. Bei einer Sumpftemperatur von ca. 50 °C und einem Vakuum von 500 bis 100 mbar wurden das freie Methanol und die Borsäureester innerhalb von 6 Stunden abdestilliert. 30 Minuten vor Destillationsende wurde bei einer Sumpftemperatur von 60 °C und einem Druck von < 1 mbar abdestilliert. Erhalten wurde eine farblose, klare Flüssigkeit mit einem SiO₂-Gehalt von 25,5 %. Die Viskosität wurde durch Abmischen mit 26 % n-Butanol auf 23 mPa s eingestellt. Der Gehalt an monomeren Silanen (²⁹Si-NMR) war < 5 mol-%, vgl. nachfolgende Abbildungen 7a, 7b, 7c, 7d und 7e (A060013391). Durch die Verdünnung des Reaktionsprodukts mit 26 % n-Butanol wurde die Lagerstabilität von 8 d 50 °C auf > 5 Monate 50 °C erhöht.

### Beispiel 6

### Herstellung eines Dynasylan^{®} GLYMO-Kondensats

233,4 g Dynasylan^{®} GLYMO wurden mit 12,4 g Borsäure im 500-ml-Vierhalskolben unter Rühren vorgelegt und auf ca. 60 °C erwärmt (weiße Suspension). Nach ca. 30 Minuten war Borsäure vollständig gelöst. Bei ca. 39 °C Sumpftemperatur wurden innerhalb von 5 Minuten 7,3 g VE-Wasser unter sehr kräftigem Rühren zugetropft. Es entstand eine klare, farblose Flüssigkeit. Bei einer Sumpftemperatur von 60 bis 70 °C wurde 9 Stunden nachgerührt. Bei einer Sumpftemperatur von ca. 50 °C und einem Vakuum von 500 bis 100 mbar wurde der gesamte Alkohol innerhalb von 15 Minuten abdestilliert. Anschließend wurde das Reaktionsprodukt bei < 1 mbar ca. 2 Stunden bis max. 70 °C Sumpftemperatur destilliert. Dabei wurden die im Sumpfprodukt noch vorhandenen Borsäureester abdestilliert.

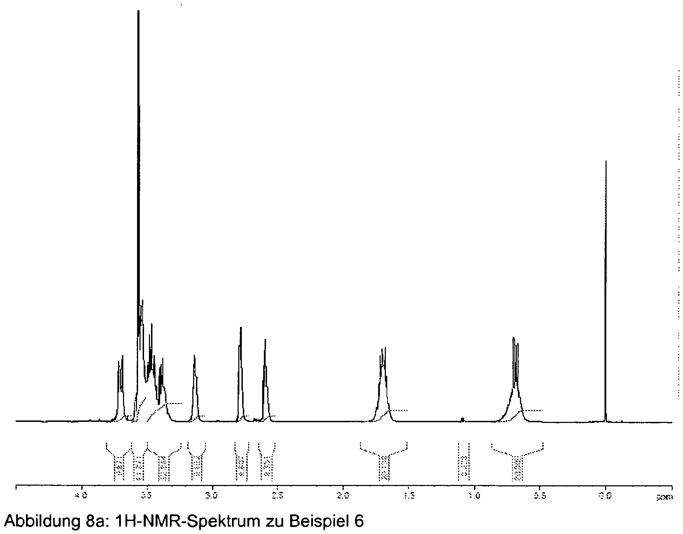

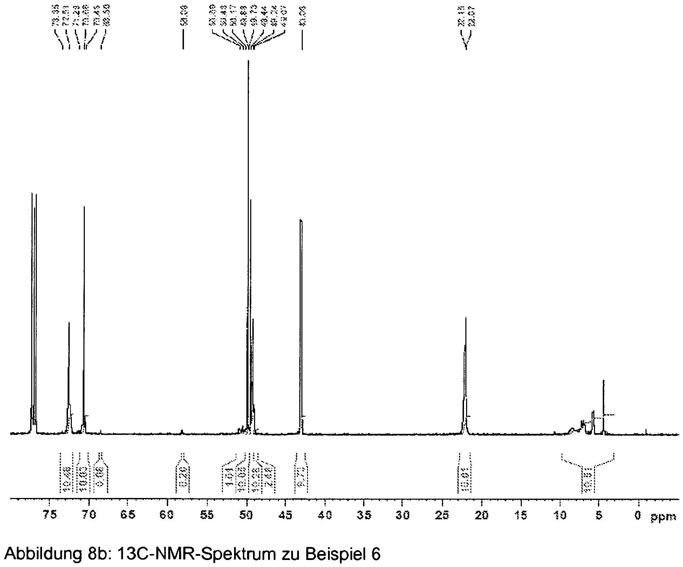

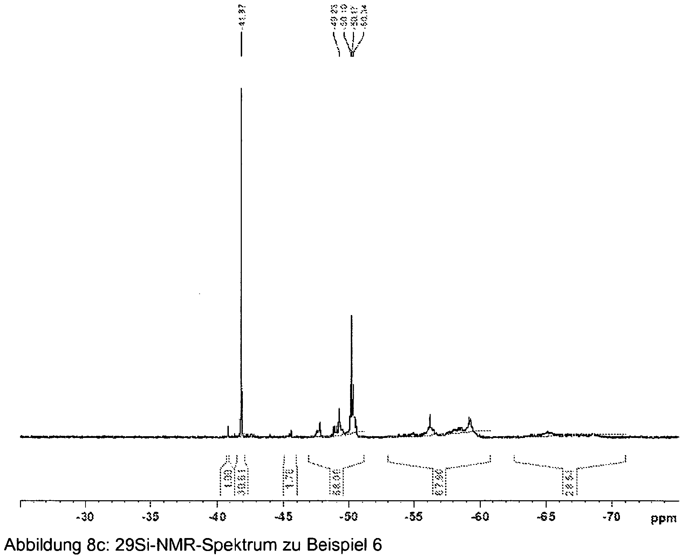

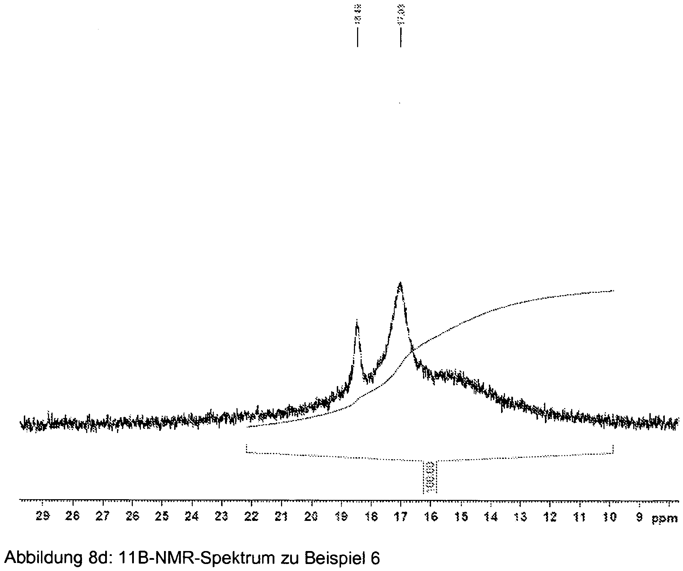

Erhalten wurde eine klare und farblose Flüssigkeit mit einer Viskosität von 341 mPa s und einem SiO₂-Gehalt von 23,0 %. Der Epoxidring (¹H-NMR) war zu 96 mol-% geschlossen. Der Monomerenanteil (²⁹NMR Analyse) lag bei 16,8 %. Vergleich nachfolgende Abbildungen 8a, 8b, 8c und 8d (A060029950). Die Lagerstabilität betrug > 2,5 Monate 50 °C.
Um die Viskosität zu senken wurde das Produkt ca. 3 : 1 mit n-Butanol verdünnt. Die Viskosität lag danach bei 19,0 mPa s.

### Analysen:

| **NMR** | ¹H-NMR; ¹³C-NMR; ²⁹Si-NMR; ¹¹B-NMR |
|---|---|
| **Viskosität (20°C)** | DIN 53015 |
| **SiO₂-Gehalt** | AN-SAA 0754 |
| **Freies Methanol** | - |
| **Methanol nach Hydrolyse** | AN-SAA 0272 |
| **GPC** | AA B-HP-FA-AT6 102 |
| **Borgehalt** | IPC-MS |

## Patentansprüche

1. Verfahren zur Durchführung einer kontrollierten Hydrolyse und Kondensation eines Epoxy-funktionellen Silans der allgemeinen Formel I
R¹-SiR'ₘ(OR)₃₋ₘ (I),
worin R¹ für eine Gruppe 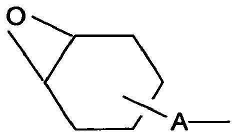 oder 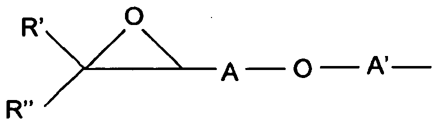 steht und
Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, Gruppen A und A' gleich oder verschieden sind und jeweils für eine bivalente Alkylgruppe mit 1 bis 10 C-Atomen stehen und m gleich 0 oder 1 ist,
und optional mindestens eines weiteren organofunktionellen Silans der allgemeinen Formel II
R²-SiR'ₙ(OR)₃₋ₙ (II)
worin Gruppen R² gleich oder verschieden sind und R² eine lineare, verzweigte oder cyclische, gegebenenfalls substituierte Alkylgruppe mit 1 bis 20 C-Atomen darstellt, R' Methyl bedeutet, Gruppen R unabhängig für einen Wasserstoff oder für eine lineare, verzweigte oder cyclische Alkylgruppe mit 1 bis 6 C-Atomen stehen und n gleich 0 oder 1 ist,
wobei man pro Mol Alkoxyfunktion der eingesetzten Silane 0,001 bis ≤ 5 Mol Wasser einsetzt, man neben Borsäure als Hydrolysekatalysator und Kondensationskomponente keinen weiteren Hydrolyse- bzw. Kondensationskatalysator verwendet und die bei der Umsetzung gebildeten Kondensate auf Si-O-B- und/oder Si-O-Si-Bindungen basieren.

2. Verfahren nach Anspruch 1,
**dadurch gekennzeichnet,**
**dass** man bei der Umsetzung pro Mol an Alkoxyfunktion der eingesetzten Silane 0,05 bis 2 Mol Wasser verwendet.

3. Verfahren nach Anspruch 1,
**dadurch gekennzeichnet,**
**dass** man insbesondere bei stöchiometrischer bzw. unterstöchiometrischer Fahrweise bei der Umsetzung 0,15 bis 1 Mol Wasser einsetzt.

4. Verfahren nach einem der Ansprüche 1 bis 2,
**dadurch gekennzeichnet,**
**dass** man pro Mol eingesetztes Silan 0,001 bis 1 Mol Borsäure einsetzt.

5. Verfahren nach einem der Ansprüche 1 bis 4,
**dadurch gekennzeichnet,**
**dass** man die Umsetzung bei einer Temperatur im Bereich von 0 bis 200 °C durchführt.

6. Verfahren nach einem der Ansprüche 1 bis 5,
**dadurch gekennzeichnet,**
**dass** man die Umsetzung unter guter Durchmischung über 0,1 bis 100 Stunden durchführt.

7. Verfahren nach einem der Ansprüche 1 bis 6,
**dadurch gekennzeichnet,**
**dass** man aus dem so erhaltenen Produktgemisch den darin vorliegenden Alkohol und/oder Borsäureester unter vermindertem Druck zumindest anteilig entfernt.

8. Gemisch Silan basierender Kondensate, erhalten nach einem der Ansprüche 1 bis 7.

9. Gemisch aus Silan basierenden Kondensaten nach Anspruch 8 mit einem Gehalt von 40 bis 100 GC-WLD-%, monomeren Silan mit einem Gehalt von 0 bis 20 GC-WLD-% und gegebenenfalls mindestens einem Alkohol mit einem Gehalt von 0 bis 50 GC-WLD-%, wobei die Angaben jeweils auf die gesamte Zusammensetzung bezogen sind und in Summe 100 GC-WLD-% ergeben.

10. Verwendung eines Gemischs Silan basierender Kondensate nach Anspruch 8 oder 9 oder eines Gemischs Silan basierender Kondensate, hergestellt nach einem der Ansprüche 1 bis 7, als oder in Bindemittel, als Haftvermittler, als Modifizierer in Polymerisationssynthesen, als Comonomer in Polymerisationssynthesen, als Bindemittel in Formulierungen der Farben und Lacke sowie der Klebstoffindustrie, als Beschichtungsmittel für Füllstoffe und Pigmente sowie als Mittel zur Modifizierung von Substratoberflächen.

## Claims

1. Process for performing a controlled hydrolysis and condensation of an epoxy-functional silane of the general formula I
R¹-SiR'ₘ(OR)₃₋ₘ (I)
in which R¹ is a 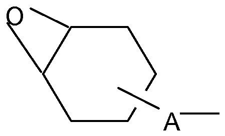 or 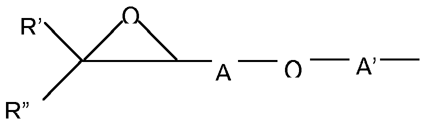 group and
R, R' and R" groups are the same or different and are each a hydrogen (H) or a linear, branched or cyclic, optionally substituted alkyl group having 1 to 6 carbon atoms, A and A' groups are the same or different and are each a bivalent alkyl group having 1 to 10 carbon atoms, and m is 0 or 1,
and optionally of at least one further organofunctional silane of the general formula II
R²-SiR'ₙ(OR)₃₋ₙ (II)
in which R² groups are the same or different, and R² is a linear, branched or cyclic, optionally substituted alkyl group having 1 to 20 carbon atoms, R' is methyl, R groups are each independently a hydrogen or a linear, branched or cyclic alkyl group having 1 to 6 carbon atoms, and n is 0 or 1,
by using 0.001 to ≤ 5 mol of water per mole of alkoxy function of the silanes used and not using any further hydrolysis or condensation catalyst apart from boric acid as a hydrolysis catalyst and condensation component, the condensates formed in the reaction being based on Si-O-B and/or Si-O-Si bonds.

2. Process according to Claim 1,
**characterized in that**
0.05 to 2 mol of water are used in the reaction per mole of alkoxy function of the silanes used.

3. Process according to Claim 1,
**characterized in that**
0.15 to 1 mol of water is used in the reaction especially in stoichiometric or substoichiometric mode.

4. Process according to either of Claims 1 and 2,
**characterized in that**
0.001 to 1 mol of boric acid is used per mole of silane used.

5. Process according to any of Claims 1 to 4,
**characterized in that**
the reaction is performed at a temperature in the range from 0 to 200°C.

6. Process according to any of Claims 1 to 5,
**characterized in that**
the reaction is performed with good mixing over 0.1 to 100 hours.

7. Process according to any of Claims 1 to 6,
**characterized in that**
the alcohol and/or boric ester present is at least partly removed under reduced pressure from the product mixture thus obtained.

8. Mixture of silane-based condensates obtained according to any of Claims 1 to 7.

9. Mixture of silane-based condensates according to Claim 8 with a content of 40 to 100 GC-TCD%, monomeric silane with a content of 0 to 20 GC-TCD%, and optionally at least one alcohol with a content of 0 to 50 GC-TCD%, the data each being based on the overall composition and adding up to 100 GC-TCD%.

10. Use of a mixture of silane-based condensates according to Claim 8 or 9 or of a mixture of silane-based condensates prepared according to any of Claims 1 to 7 as or in binders, as an adhesion promoter, as a modifier in polymerization syntheses, as a comonomer in polymerization syntheses, as a binder in formulations of paints and lacquers and in the adhesives industry, as a coating material for fillers and pigments, and as a means of modifying substrate surfaces.

## Revendications

1. Procédé pour l'exécution d'une hydrolyse et condensation contrôlée d'un silane à fonction époxy de formule générale I
R¹-SiR'ₘ(OR)₃₋ₘ (I),
dans laquelle R¹ représente un groupe 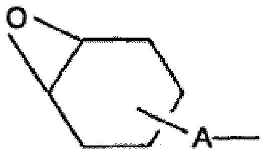 ou 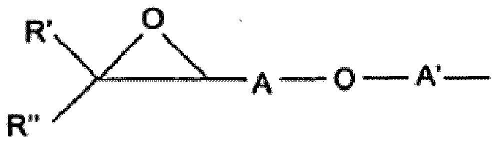 et
les groupes R, R' ainsi que R" sont identiques ou différents et représentent chacun un atome d'hydrogène (H) ou un groupe alkyle linéaire, ramifié ou cyclique, éventuellement substitué, ayant de 1 à 6 atomes de carbone, les groupes A et A' sont identiques ou différents et représentent chacun un groupe alkyle bivalent ayant de 1 à 10 atomes de carbone et m est égal à 0 ou 1,
et en option d'au moins un autre silane organofonctionnel de formule générale II
R²-SiR'ₙ(OR)₃₋ₙ (II)
dans laquelle les groupes R² sont identiques ou différents, et R² représente un groupe alkyle linéaire, ramifié ou cyclique, éventuellement substitué, ayant de 1 à 20 atomes de carbone, R' représente le groupe méthyle, les groupes R représentent indépendamment un atome d'hydrogène ou un groupe alkyle linéaire, ramifié ou cyclique ayant de 1 à 6 atomes de carbone et n est égal à 0 ou 1,
dans lequel on utilise de 0,001 à ≤ 5 moles d'eau par mole de fonction alcoxy des silanes utilisés, hormis l'aide borique en tant que catalyseur d'hydrolyse et composant de condensation on n'utilise aucun autre catalyseur d'hydrolyse ou de condensation et les produits de condensation formés lors de la réaction sont à base de liaisons Si-O-B et/ou Si-O-Si.

2. Procédé selon la revendication 1, **caractérisé en ce que** dans la réaction on utilise de 0,05 à 2 moles d'eau par mole de fonction alcoxy des silanes utilisés.

3. Procédé selon la revendication 1, **caractérisé en ce qu'**en particulier dans le mode opératoire stoechiométrique ou sous-stoechiométrique on utilise dans la réaction de 0,15 à 1 mole d'eau.

4. Procédé selon la revendication 1 ou 2, **caractérisé en ce qu'**on utilise de 0,001 à 1 mole d'acide borique par mole de silane utilisé.

5. Procédé selon l'une quelconque des revendications 1 à 4, **caractérisé en ce qu'**on effectue la réaction à une température dans la plage de 0 à 200 °C.

6. Procédé selon l'une quelconque des revendications 1 à 5, **caractérisé en ce qu'**on effectue la réaction pendant 0,1 à 100 heures sous bonne homogénéisation.

7. Procédé selon l'une quelconque des revendications 1 à 6, **caractérisé en ce qu'**on élimine du mélange de produits ainsi obtenu, sous pression réduite, au moins en partie l'alcool et/ou l'ester d'acide borique contenus dans celui-ci.

8. Mélange de produits de condensation à base de silane, obtenus selon l'une quelconque des revendications 1 à 7.

9. Mélange de produits de condensation à base de silane selon la revendication 8, à une concentration de 40 à 100 % par GC-WLD, de silane monomère à une concentration de 0 à 20 % par GC-WLD et éventuellement d'au moins un alcool à une concentration de 0 à 50 % par GC-WLD, les données se rapportant à la composition totale et faisant au total 100 % par GC-WLD.

10. Utilisation d'un mélange de produits de condensation à base de silane selon la revendication 8 ou 9 ou d'un mélange de produits de condensation à base de silane préparé selon l'une quelconque des revendications 1 à 7, en tant que ou dans un liant, en tant que promoteur d'adhérence, en tant que modificateur dans des synthèses par polymérisation en tant que comonomère dans des synthèses par polymérisation, en tant que liant dans des formulations des peintures et vernis ainsi que dans l'industrie des adhésifs, en tant qu'agent d'enrobage pour charges et pigments ainsi que comme agent pour la modification de surfaces de substrats.
